**Europäisches Patentamt**

**European Patent Office**

**Office européen des brevets**

(11) Numéro de publication : **0 505 257 A1**

(12) **DEMANDE DE BREVET EUROPEEN**

(21) Numéro de dépôt : **92400692.7**

(22) Date de dépôt : **16.03.92**

(51) Int. Cl.$^5$ : **G02B 6/38**

(30) Priorité : **18.03.91 FR 9103259**

(43) Date de publication de la demande :
**23.09.92 Bulletin 92/39**

(84) Etats contractants désignés :
**DE FR GB IT NL SE**

(71) Demandeur : **ALCATEL N.V.**
**Strawinskylaan 537 (World Trade Center)**
**NL-1077 XX Amsterdam (NL)**

(72) Inventeur : **Brehm, Claude**
**56, rue Louis Rolland**
**F-92120 Montrouge (FR)**
Inventeur : **Dumas, Jean-Pierre**
**15, avenue Jean Moulin**
**F-91360 Villemoisson Sur Orge (FR)**
Inventeur : **Tardy, André**
**19, avenue d'Arpajon**
**F-91520 Egly (FR)**
Inventeur : **Brouard, Dominique**
**23, rue Saint Amand**
**F-75015 Paris (FR)**

(74) Mandataire : **Laroche, Danièle et al**
**c/o SOSPI 14-16 rue de la Baume**
**F-75008 Paris (FR)**

(54) **Procédé de raccordement de deux câbles à fibres optiques par épissurage.**

(57) Procédé de raccordement de deux câbles à fibres optiques par épissurage, caractérisé par le fait que :

— on utilise une multiférule (1) en verre présentant d'une part une série de canaux capillaires (2) internes à axes parallèles, débouchant sur les deux faces extrêmes (6, 7) de ladite multiférule, et d'autre part deux faces extérieures (3, 4), dites faces de référence,

— on introduit une colle polymérisable par irradiation aux U.V. dans lesdits canaux,

— on découpe ladite multiférule (1) en trois tronçons,

— on réalise l'épissure par raccordement des deux tronçons extrêmes.

FIG. 1

La présente invention concerne un procédé de raccordement de deux câbles à fibres optiques par épissurage.

On s'intéresse particulièrement, mais non exclusivement, à deux câbles en forme de rubans comportant une pluralité de fibres monomodes.

Ces câbles multifibres sont destinés à équiper de futurs réseaux optiques multiservices. Le problème du raccordement entre deux de ces câbles se pose en termes de coût, de qualité optique et de facilité opératoire.

On sait que le raccordement de deux fibres optiques implique, compte-tenu du fort confinement de l'énergie optique, des tolérances dimensionnelles de l'ordre du micromètre. Le raccordement simultané de plusieurs couples de fibres accentue bien entendu la difficulté, d'autant que les objectifs économiques exigent un dispositif de connexion à bas prix de revient, utilisé par un personnel peu qualifié dans des conditions opératoires et un environnement extérieur difficiles, notamment dans les tranchées.

A l'heure actuelle un opérateur met en place les extrémités des fibres de chaque câble dans des vés gravés chimiquement sur une face d'une plaquette primaire en silicium ; une plaque complémentaire permet l'immobilisation des fibres. L'alignement correct des deux câbles implique la mise en oeuvre de moyens de guidage complexes et coûteux. Des moyens sont décrits, par exemple dans le brevet US-A-3 864 018 ou l'article de P. STEINMAN paru dans "Fiber and Integrated Optics" vol 9 pp.43-52. Ainsi les plaquettes primaires présentent des saillies sur leurs faces extérieures, coopérant avec des rainures gravées présentées par des plaquettes secondaires en silicium prenant en sandwich les extrémités des deux câbles. Ces techniques impliquent des tolérances sévères à la fois sur l'épaisseur des plaquettes primaires, la largeur et l'angle des rainures des plaquettes secondaires, l'espacement de ces rainures. Les extrémités de chaque câble demandent une opération de polissage optique longue et délicate. L'ensemble du montage est difficile et coûteux.

La présente invention a pour but de mettre en oeuvre des moyens permettant de simplifier considérablement le procédé de raccordement de deux câbles à fibres optiques.

La présente invention a pour objet un procédé de raccordement de deux câbles à fibres optiques par épissurage, caractérisé par le fait que :

– on utilise une multiférule en verre présentant d'une part une série de canaux capillaires internes à axes parallèles, débouchant sur les deux faces extrêmes de ladite multiférule, et d'autre part deux faces extérieures, dites faces de référence,
– on introduit une colle dans lesdits canaux,
– on enfile les extrémités dénudées des fibres des deux câbles dans lesdits canaux respectivement par lesdites deux faces extrêmes jusqu'à ce qu'elles parviennent sensiblement jusqu'à la partie centrale de ladite multiférule et s'y trouvent immobilisées,
– on découpe ladite multiférule et lesdites fibres transversalement auxdites fibres au niveau de deux sections situées de part et d'autre de ladite partie centrale, pour obtenir deux tronçons de multiférule solidarisés respectivement auxdits câbles et un tronçon intermédiaire de multiférule qui est éliminé,
– on aligne lesdits deux tronçons de multiférule dans un corps d'épissure par guidage desdites faces de référence qui leur sont. communes, et, avant de réaliser le contact, on injecte dans ledit corps un gel servant à l'adaptation des indices de réfraction au niveau des interfaces desdites fibres.

Le procédé de l'invention fait ainsi intervenir deux tronçons de multiférule extraits d'une même multiférule de base et situés initialement dans des zones très voisines de cette dernière, distantes par exemple d'une dizaine de millimètres. Par conséquent ces deux tronçons ont intrinsèquement les mêmes caractéristiques géométriques au niveau de leurs canaux internes et de leurs faces externes de référence ; les écarts éventuels se trouvent à l'intérieur de tolérances permettant d'assurer un très bon couplage optique.

Selon un mode de réalisation particulier, on facilite la découpe desdits tronçons de multiférule en prévoyant des amorces de rupture dans ladite multiférule, sous forme de rainures orthogonales auxdits canaux.

Ainsi, lorsque lesdits canaux se trouvent dans un même plan à l'intérieur de la multiférule, on prévoit deux rainures parallèles entre elles, orthogonales audit plan et débouchant dans lesdits canaux. On peut également prévoir deux rainures supplémentaires au droit des précédentes dans la face opposée de ladite multiférule. Ces rainures supplémentaires ont par exemple la forme d'un vé dissymétrique.

Selon un perfectionnement lesdites faces extrêmes de la multiférule sont usinées de manière à présenter une surface d'appui pour les gaines desdits câbles.

De plus les extrémités desdits canaux sont usinées pour être munies de chanfreins facilitant l'introduction des fibres.

Selon un mode de réalisation particulier la section de découpe des fibres est oblique par rapport à l'axe desdits canaux, la lumière rétroréfléchie étant ainsi réduite.

D'autres caractéristiques et avantages de la présente invention apparaîtront au cours de la description suivante de modes de réalisation donnés à titre illustratif mais nullement limitatif. Dans le dessin très schématique annexé :

– la figure 1 est une vue en élévation d'une multiférule entrant dans la mise en oeuvre du procédé selon l'invention

– la figure 2 est une vue en coupe selon la ligne II-II de la figure 1

– la figure 3 est une vue de côté de la multiférule de la figure 1

– la figure 4 montre la phase de collage des fibres de deux câbles dans la multiférule de la figure 1

– les figures 5 et 6 montrent la phase de découpe de la multiférule de la figure 1

– la figure 7 montre les deux tronçons de multiférule liés respectivement à leurs câbles et séparés du tronçon intermédiaire

– la figure 8 montre les deux tronçons de la figure 7 réunis dans un corps d'épissure

– la figure 9 est une vue de côté du corps de la figure 8.

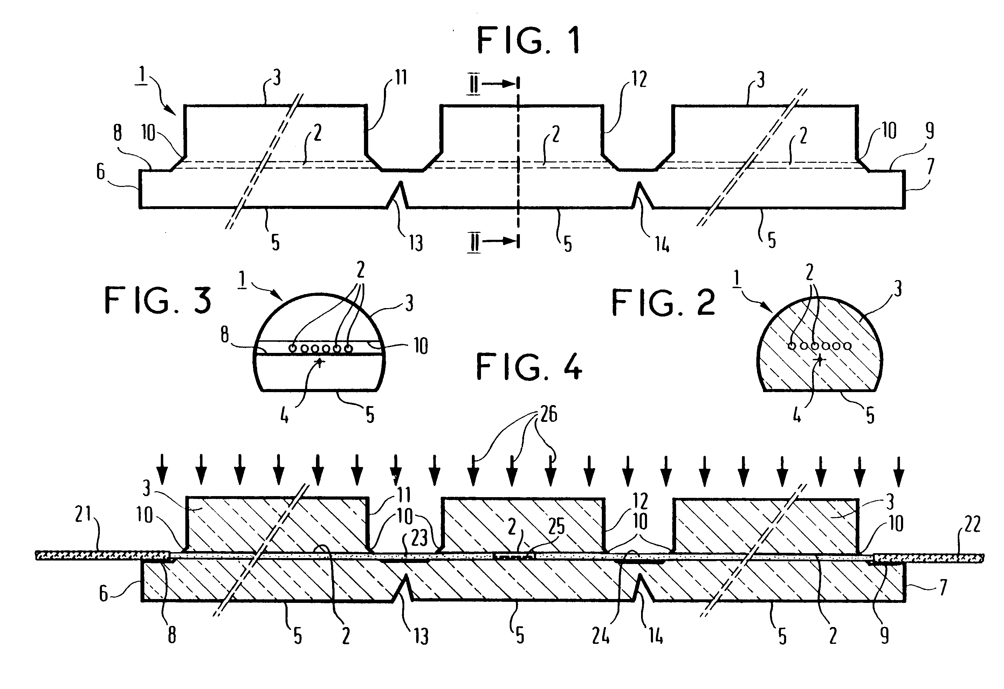

On voit dans les figures 1 à 3 une multiférule 1 en verre de silice comportant intérieurement une série de canaux capillaires 2 à axes parallèles situés (dans cet exemple) dans un même plan.

Une telle multiférule a fait l'objet du brevet français FR-A-9013857.

Extérieurement elle présente une face 3 appartenant à un cylindre d'axe 4 et de diamètre 3mm, et une face plane 5 de largeur voisine de 2,5mm. Les faces 3 et 5 seront dites "faces de référence". La longueur de la multiférule est de 30mm.

Le plan des canaux 2 est voisin du plan diamétral du cylindre d'axe 4, parallèle à la face 5. On peut envisager six canaux 2 équidistants, avec un espacement de 250 μm correspondant au nombre de fibres et à leur espacement dans les câbles 21 et 22 à raccorder, visibles dans la figure 4.

Les faces d'extrémité 6 et 7 sont usinées de manière à présenter une surface d'appui 8, 9 pour les câbles à raccorder. La surface 8, 9 se trouve à 125 μm (avec une tolérance - 0, + 25 μm) du plan diamétral des canaux 2. Par ailleurs les entrées des canaux 2 sont munies de chanfreins 10 pour faciliter l'introduction des fibres. On prévoit également à cet effet un pan oblique usiné (non référencé) à l'entrée des canaux 2.

En outre la multiférule 1 présente plusieurs usinages transversaux destinés à constituer des amorces de rupture pour faciliter son tronçonnage ultérieur. Ainsi on réalise deux rainures 11 et 12 de largeur 2mm, distantes d'axe à axe de 8mm, orthogonales au plan des canaux 2 et dont le fond débouche dans les canaux 2. Des chanfreins 10 sont de préférence ménagés au fond des rainures, toujours pour faciliter le passage des fibres dans leurs canaux.

Vis-à-vis de là côté nominale, qui serait celle du plan diamétral des canaux 2, une tolérance de ± 25 μm sur la hauteur des rainures 11 et 12 serait acceptable. Au droit de ces rainures 11 et 12 sont usinées dans la face 5 des rainures supplémentaires en forme de vés dissymétriques 13 et 14.

On peut introduire dans les canaux 2 de la multiférule 1 qui vient d'être décrite une colle 25 de faible viscosité, polymérisable sous l'action d'un rayonnement ultraviolet, et conditionner le composant ainsi réalisé dans un tube plastique opaque, pour le conserver jusqu'à une utilisation ultérieure. Grâce à la nature du matériau de la multiférule, le verre de silice, dont le coefficient de dilatation est très faible, la stabilité dimensionnelle du composant est garantie.

Le procédé d'épissurage selon l'invention va être décrit ci-dessous dans ses différentes phases, pour le raccordement des câbles rubans 21 et 22 dont une seule fibre 23, 24 est visible dans la figure 4.

Les deux câbles 21 et 22 subissent tout d'abord une opération de dénudage, consistant à enlever les revêtements plastiques de protection des fibres 23, 24 sur une longueur donnée, avec une large tolérance de ± 1mm. Aucune condition n'est imposée pour la qualité des extrémités des fibres ; les ébréchures sont mêmes tolérables.

Les extrémités de fibres 23, 24 ainsi préparées sont introduites collectivement dans les canaux 2 de la multiférule 1 où se trouve de la colle 25 polymérisable aux ultra-violets. Cette opération est effectuée commodément, d'une part grâce à la concordance entre l'espacement des fibres d'un même câble et celui des canaux et d'autre part grâce à la présence des chanfreins 10.

L'introduction des fibres est effectuée jusqu'à ce que le revêtement plastique des câbles 21, 22 repose sur les surfaces 8 et 9, la longueur dénudée des fibres 23, 24 étant telle qu'elles soient egagées dans la partie centrale de la multiférule 1. Un apport de colle sur les surfaces 8 et 9 permet de solidariser les câbles 21 et 22 à la multiférule, tandis qu'une illumination par un rayonnement UV (schématisée par les flèches 26) assure l'adhérence des fibres.

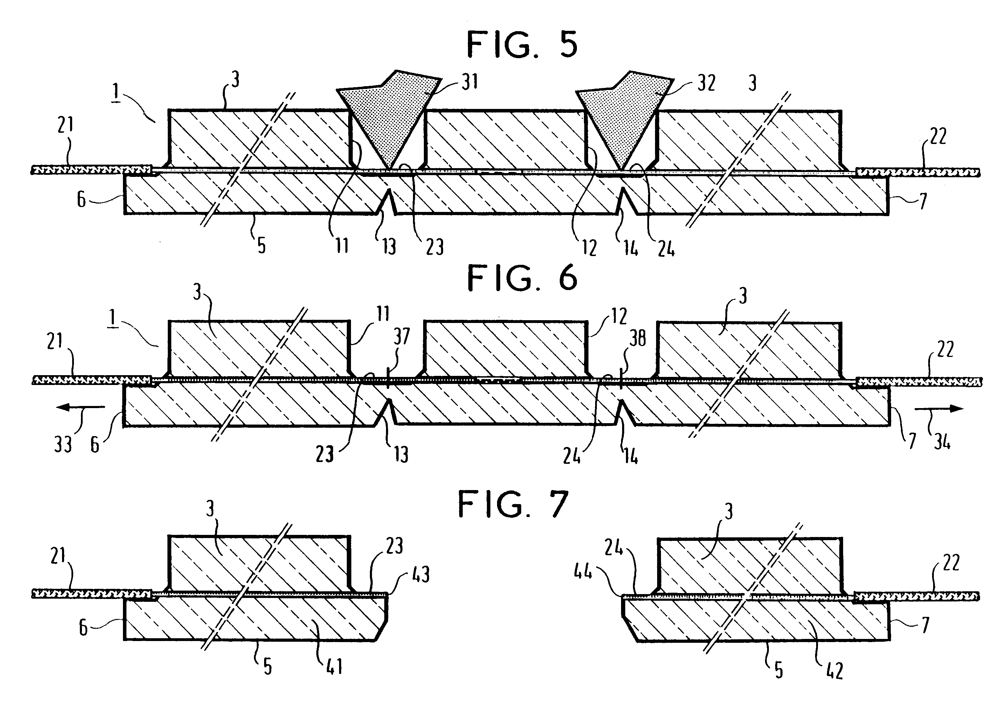

La multiférule 1 avec ses deux câbles 21, 22 est immobilisée dans un outillage. On met alors en oeuvre (figure 5) deux couteaux à fil diamanté 31 et 32, d'extrémité prismatique (avec un aryle de 60° par exemple) pour rayer les surfaces des fibres 23, 24 au niveau des rainures 11 et 12 et créer des amorces de rupture. Ces couteaux sont suspendus verticalement avec un rappel par ressort, et mobiles transversalement.

Comme cela apparaît dans la figure 6, des moyens de traction latérale schématisés par les flèches 33 et 34 sollicitent la multiférule 1 pour initier la rupture au niveau des zones rayées 37, 38 associées aux vés 13, 14.

On obtient après rupture deux tronçons de multiférule 41 et 42 liés respectivement aux câbles rubans 21, 22 (figure 7) ; les fibres 23, 24 ont leurs faces extrêmes 43, 44 présentant la qualité optique requise pour le couplage optique. Selon les outils 31, 32 utilisés, les faces 43, 44 peuvent être droites ou obliques vis-à-vis des axes des canaux 2.

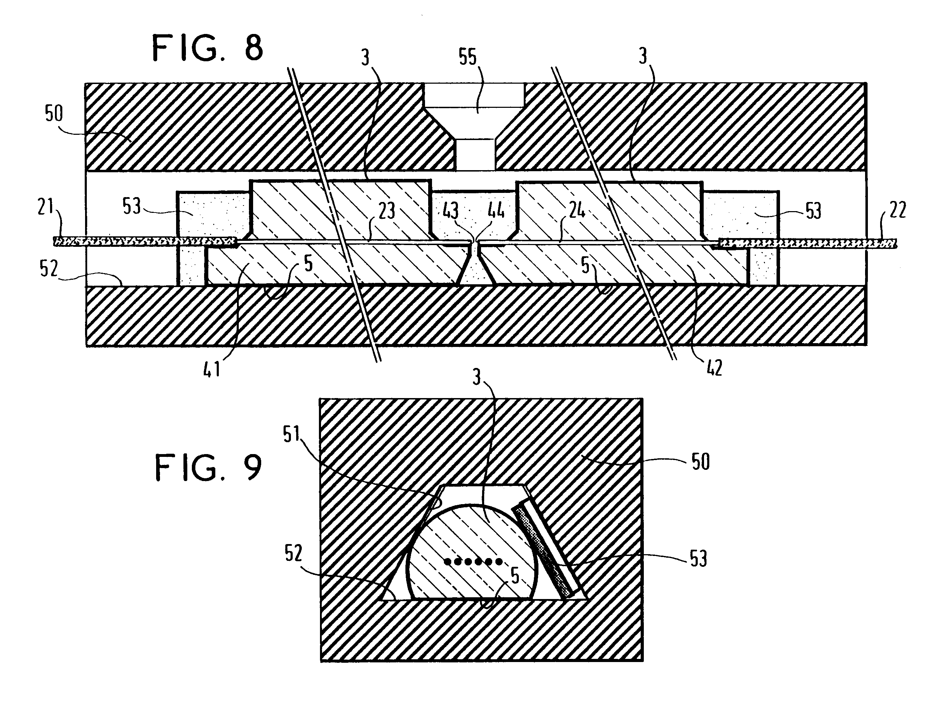

Selon l'invention, les deux tronçons 41, 42 de multiférule ont des faces externes de référence 3 et 5 extraites de zones très voisines de la même multiférule de base 1. Or on sait réaliser, sur des distances longitudinales de quelques centimètres, des multiférules dont les dimensions externes, et le parallélisme entre les axes des canaux 2 et l'axe 4, soient suffisamment invariants pour que l'on puisse réaliser un alignement optique satisfaisant, conformément aux schémas des figures 8 et 9 :

– Les tolérances sur le diamètre des canaux sont : 0, + 1 μm .

– La dispersion des positions des axes des canaux, vis-à-vis du meilleur plan passant au plus près de chaque axe, doit être comprise entre ± 10 μm.

– La dispersion des espacements entre les axes des canaux, dans la direction du meilleur plan précité, est comprise entre ± 10 μm.

On voit dans les schémas des figures 8 et 9 un corps d'épissurage 50 qui assure l'alignement et la fixation mécanique des deux tronçons 41 et 42.

Les faces de référence 3 et 5 sont appliquées contre des faces 51 et 52 du corps d'épissure grâce à un ressort 53, du type lame à déformation élastique. Avant le contact des tronçons 41 et 42, on injecte par l'orifice 55 un gel servant à l'adaptation des indices de réfraction au niveau des interfaces 43, 44.

Bien entendu l'invention n'est pas limitée au mode de réalisation qui vient d'être décrit. On pourra, sans sortir du cadre de l'invention, remplacer tout moyen par un moyen équivalent.

**Revendications**

**1/** Procédé de raccordement de deux câbles à fibres optiques par épissurage, caractérisé par le fait que :

– on utilise une multiférule en verre présentant d'une part une série de canaux capillaires internes à axes parallèles, débouchant sur les deux faces extrêmes de ladite multiférule, et d'autre part deux faces extérieures, dites faces de référence,

– on introduit une colle dans lesdits canaux,

– on enfile les extrémités dénudées des fibres des deux câbles dans lesdits canaux respectivement par lesdites deux faces extrêmes jusqu'à ce qu'elles parviennent sensiblement jusqu'à la partie centrale de ladite multiférule et s'y trouvent immobilisées,

– on découpe ladite multiférule et lesdites fibres transversalement auxdites fibres au niveau de deux sections situées de part et d'autre de ladite partie centrale pour obtenir deux tronçons de multiférule solidarisés respectivement auxdits câbles et un tronçon intermédiaire de multiférule qui est éliminé,

– on aligne lesdits deux tronçons de multiférule dans un corps d'épissure par guidage desdites faces de référence qui leur sont communes, et, avant de réaliser le contact, on injecte dans ledit corps un gel servant à l'adaptation des indices de réfraction au niveau des interfaces desdites fibres.

**2/** Procédé de raccordement selon la revendication 1, caractérisé par le fait que la découpe de ladite multiférule en tronçons est facilitée par des amorces de rupture prévues transversalement auxdits canaux.

**3/** Procédé de raccordement selon la revendication 1, caractérisé par le fait que lesdits canaux se trouvent dans un même plan à l'intérieur de la multiférule et que l'on prévoit deux rainures parallèles entre elles, orthogonales audit plan et débouchant dans lesdits canaux pour faciliter la découpe desdits tronçons.

**4/** Procédé de raccordement selon la revendication 3, caractérisé par le fait que l'on prévoit, au droit desdites rainures et sur la face opposée de ladite multiférule, deux rainures supplémentaires pour créer des amorces de rupture.

**5/** Procédé de raccordement selon la revendication 4, caractérisé par le fait que lesdites rainures supplémentaires ont la forme d'un vé dissymétrique.

**6/** Procédé de raccordement selon l'une des revendications précédentes, caractérisé par le fait que lesdites faces extrêmes de ladite multiférule présentent une surface d'appui pour les gaines en matériau isolant desdits câbles.

**7/** Procédé de raccordement selon l'une des revendications précédentes, caractérisé par le fait que les extrémités desdits canaux sont munies d'un chanfrein facilitant l'introduction des fibres.

**8/** Procédé de raccordement selon l'une des revendications précédentes, caractérisé par le fait que l'opération de découpe desdites fibres est menée de manière que la section de coupe de ces fibres soit oblique par rapport à l'axe desdits canaux.

FIG. 1

FIG. 3

FIG. 2

FIG. 4

EP 0 505 257 A1

# FIG. 5

# FIG. 6

# FIG. 7

## FIG. 8

## FIG. 9

**Office européen
des brevets**

# RAPPORT DE RECHERCHE EUROPEENNE

Numero de la demande

EP    92 40 0692

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | EP-A-0 005 792 (COMPAGNIE LYONNAISE)<br>* page 5, ligne 23 - ligne 35; figures *<br>* page 6, ligne 1 - ligne 36 *<br>* page 7, ligne 1 - ligne 36 *<br>* page 8, ligne 1 - ligne 3 *<br>--- | 1 | G02B6/38 |
| A | PATENT ABSTRACTS OF JAPAN<br>vol. 2, no. 150 15 Décembre 1978<br>& JP-A-53 119 059 ( FURUKAWA  DENKI ) 18 Octobre<br>1978 PAGE 9651  E  78<br>* abrégé *<br>--- | 1,6 | |
| A | US-A-3 871 935 (GLOGE D. CH.)<br>* le document en entier *<br>--- | 1 | |
| A | EP-A-0 241 724 (SUMITOMO ELECTRIC)<br>*  abrégé ; figures 3, 22, 25-27  *<br>* colonne 27 *<br><br>----- | 1,6 | |
| | | | **DOMAINES TECHNIQUES RECHERCHES (Int. Cl.5)**<br><br>G02B |

Le présent rapport a été établi pour toutes les revendications

| Lieu de la recherche | Date d'achèvement de la recherche | Examinateur |
|---|---|---|
| LA HAYE | 01 JUIN 1992 | MATHYSSEK K. |

CATEGORIE DES DOCUMENTS CITES

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons
.......................................................................................
& : membre de la même famille, document correspondant

EPO FORM 1503 03.82 (P0402)